# EUROPEAN PATENT SPECIFICATION

(11) **EP 3 103 348 B1**
(45) Date of publication and mention of the grant of the patent: **31.10.2018**
(21) Application number: 15171209.8
(22) Date of filing: 09.06.2015
(51) Int. Cl.: A22C 15/00, B65G 47/61

(54) **HANDLING APPARATUS AND METHOD**
HANDHABUNGSVORRICHTUNG UND -VERFAHREN
APPAREIL ET PROCÉDÉ DE MANIPULATION

(43) Date of publication of application: 14.12.2016
(73) Proprietor: Poly-clip System GmbH & Co. KG, 65795 Hattersheim (DE)
(72) Inventor: Hofschulte, Jens, Dr.-Ing., 61381 Friedrichsdorf (DE)
(74) Representative: Eisenführ Speiser

(56) References cited:
- EP-A1- 1 782 693
- EP-A1- 1 891 858
- EP-A1- 2 384 638
- EP-A1- 2 692 236
- DE-C1- 10 046 417

## Description

The present invention relates to a handling apparatus for handling rod-shaped storage devices, like smoking rods, configured to be loaded with at least one sausage-shaped product, like a sausage, having a sausage-shaped body and a suspension element, like a suspension loop, wherein the at least one sausage-shaped product can be suspended in a pendulous way on a rod-shaped storage device by their suspension elements, as well as a method therefor.

From EP 2 384 638 A1 a handling system for transporting, removing or inserting rod-like elements is known, comprising a robotic device and a production line for producing sausage-shaped products.

In practice, in the production and handling of sausage-shaped products, like sausages, filling material is fed by a filling machine through a filling tube of a clipping machine in a feeding direction into a tubular or bag-shaped packaging casing which is closed at its front end, i.e. the end pointing in the feeding direction of the filling material, by, for example, a closure means, like a closure clip. After a predetermined volume of filling material has been filled into said tubular packaging casing, gathering means with a first and a second displacer unit which can each be formed by a pair of reversibly moveable displacer elements, form a plait-like portion of the tubular packaging casing, which is at least substantially free of filling material. The clipping machine then places and closes at least one further closure means, like a closure clip, at the plait-like portion forming the rear end of the sausage- or bag-shaped product just produced, i.e. the end pointing opposite to the feeding direction, by respective closing tools which are reversibly movable towards the plait-like portion. In the case that the sausage-shaped product has to be hung up subsequently, a suspension element, like a suspension loop, is provided and attached to the second end of the sausage-shaped product by the closure clip.

If the sausage-shaped products are to be hung up or suspended on a rod-shaped storage device, the sausage-shaped products are fed out of the clipping machine and transferred to a hanging line as it is disclosed in EP patent application 1 891 858. In said hanging line, the sausage-shaped products are hung up successively on a rod-shaped smoking bar or smoking rod forming the rod-shaped storage device with a small distance between the successive sausage-shaped products in order to avoid that the products can touch each other and can thus be damaged. After a predetermined number of sausage-shaped products have been hung up on a smoking rod, said smoking rod is transferred to a storage rack for further treatment. Thereafter, a next empty smoking rod is inserted into the hanging station and is filled with sausage-shaped products and transferred to the storage rack.

In known storage racks, a predetermined number of filled smoking rods are positioned in one storage level of the storage rack. Dependent on the size of the sausage-shaped products, in particular their length, the filled smoking rods may be positioned in more then one storage level of a storage rack. The filled smoking rods may be positioned in the storage rack manually or automatically, e.g. by a handling device.

A rod-shaped storage device completely or partially filled with sausage-shaped products suspended on said rod-shaped storage device can be transferred from the hanging station of a hanging line to a storage rack by an operator. This is a high physical effort. Alternatively, a robotic device as disclosed in EP patent application 2 342 972 and including a gripper for grabbing a smoking rod, is recently used. This robotic device transfers the rod-shaped storage devices or smoking rods with the sausage-shaped products suspended thereon to the storage rack.

In any case, when using known storage racks, the filled smoking rod has to be rotated in a horizontal plane or tilted for being inserted into the respective storage level of the storage rack. Accordingly, it may be necessary to shift the smoking rods already stored in the storage level to be filled, towards the rear side of the storage rack in order to provide enough space for allowing the next smoking rod to enter the storage level. Thus, it may be necessary to re-align the smoking rods already being accommodated in the respective storage level in regular intervals for enabling a complete or maximum filling of the storage level of the storage rack. Also, the sausage-shaped products hanging on the smoking rod may slip from their desired position on the smoking rod during the insertion of the smoking rod into the storage rack. Thus, the sausage-shaped products may be damaged and/or may be re-aligned on the smoking rod when positioned in the storage rack.

Thus, it is an object of the present invention to provide a handling apparatus and a handling method for handling rod-shaped storage devices configured to be loaded with sausage-shaped products, which overcome the above mentioned draw backs, and which allow a more effective handling of a rod-shaped storage device loaded with sausage-shaped products.

The object regarding the handling apparatus is achieved by the features of claim 1, and the object regarding the method for controlling a handling apparatus for handling sausage-shaped products is achieved by the features of claim 14. In sub-claims 2 to 13 and 15, preferred embodiments of the handling apparatus and the method, respectively, are disclosed.

According to the present invention, there is provided a handling apparatus for handling rod-shaped storage devices, like smoking rods, configured to be loaded with sausage-shaped products, like sausages, each having a sausage-shaped body and a suspension element, like a suspension loop, wherein the sausage-shaped product can be suspended on a rod-shaped storage device by their suspension elements. The handling device comprises a carrier device including supporting means for supporting a rod-shaped storage device and at least one receiving means oriented in a receiving direction and configured to receive a suspension element of a sausage-shaped product suspended on a rod-shaped storage device, a preventing device being arranged in an at least approximately vertical direction below the carrier device and including at least one preventing means configured to cooperate with the receiving means of the carrier device for securing the suspension element of the sausage-shaped product being received in the at least one receiving means of the carrier device, and drive means for reversibly enabling a relative movement among the carrier device and the preventing device between a receiving position and a securing position.

In the receiving position, the at least one receiving means of the carrier device and the at least one preventing means of the preventing device are arranged to each other such that a suspension loop can be received by said receiving means without interference of the preventing means. Thus, the at least one receiving means of the carrier device receives the suspension element of a sausage-shaped product when the handling apparatus has been moved in the receiving direction and holds the suspension element of the sausage-shaped product in its desired position on the rod-shaped storage device. After the carrier device and the preventing device are moved relatively to each other from the receiving position into the securing position, the at least one preventing means fixes or clamps the suspension loop between the preventing means and the receiving means such that the suspension loop of the respective sausage-shaped product cannot move, in particular cannot slip away from its desired position and prevents therefore the sausage-shaped product to slip out of its position reached during their hanging or suspending on the rod-shaped storage device in, e.g., a hanging station. Moreover, the rod-shaped storage device is secured on the supporting means of the carrier device. Furthermore, the sausage-shaped body of at least the outer-most sausage-shaped product on the rod-shaped storage device is shifted away from the respective end of rod-shaped storage device, whereby the suspension element is maintained on its initial storage place on the rod-shaped storage device. Thereby, the respective end portion of the rod-shaped storage device is extended, which enables an easier insertion of the rod-shaped storage device loaded with sausage-shaped products into a storage frame, like a storage rack, without the need of shifting the rod-like storage devices already positioned in the respective storage level of the storage frame. Moreover, unintentional slipping of sausage-shaped products from their desired storage places on rod-shaped storage devices already stored in the storage rack, is omitted.

It has to be noted that the drive means for reversibly enabling a relative movement among the carrier device and the preventing device between a receiving position and a securing position, in the sense of the present invention, may be realized by any suitable elements which enable the intended movement of the carrier device and the preventing device. In the simplest case, the drive means include guide elements which guide the carrier device and the preventing device along each other, and which enable a manual actuation or drive of the carrier device and/or the preventing device. In a more complex design, the drive means may also include a drive element which, in a further simple construction, may be a handle, or, in the case that an automated actuation is desired, a drive which includes a hydraulic or pneumatic piston/cylinder arrangement or electric drive elements like an electric motor or the like.

One of the ideas of the present invention is based on the fact that the suspension element of a sausage-shaped product is fixed or clamped between the receiving means and the preventing means when they are in the securing position. Moreover, it has further to be noted that the receiving means of the carrier device and the preventing means of the preventing device can both be moved for reaching the securing position, but it is also possible that only the receiving means of the carrier device or the complete carrier device, or the preventing means of the preventing device or the complete preventing device are moved in the securing position.

Moreover, due to this clamping or holding of the suspension loops of the sausage-shaped products, their free length for carrying out the pendulous movement is reduced. Even if the sausage-shaped products carry out such a pendulous movement, the radius of this movement is relatively short. Therefore, a damage of the sausage-shaped products is also prevented. Additionally, the suspension elements of the sausage-shaped products are secured in their initial position on the rod-shaped storage device, and, due to the weight of the sausage-shaped products acting on the rod-shaped storage device via their suspension elements, the rod-shaped storage device is secured in its position on the carrier device.

In order to allow an engagement of the suspension element of at least one sausage-shaped product suspended on the rod-shaped storage device to be handled, in an advantageous embodiment of the inventive handling apparatus, the at least one receiving means is formed by a recess the opening of which is directed in the receiving direction.

Naturally, the at least one receiving means may also have any other suitable design, like two protrusions located close and preferably parallel to each other, which face into the engagement direction, and between which the suspension element may engage or may be received and held or secured.

In a further advantageous embodiment of the inventive handling apparatus, the at least one preventing means is formed by a protrusion directed in the receiving direction.

It has to be understood that the at least one receiving means of the carrier device and the at least one preventing means of the preventing device may be formed by separate elements attached to the carrier device and the preventing device, respectively. Alternatively, the at least one receiving means of the carrier device and the at least one preventing means of the preventing device may also be formed integrally with the carrier device and the preventing device, respectively.

In an embodiment of the inventive handling apparatus, the carrier device and the preventing device, each may include a base element or body cut from a metal sheet and bent into a suitable form, like a U-shaped profile including tines extending from one of the longitudinal edges of the profile in the receiving direction and forming the receiving means and the preventing means, respectively.

It has further to be understood that the carrier device may comprise more than one receiving means. The number of receiving means may be selected dependent on the maximum or minimum number of sausage-shaped products to be suspended on a respective rod-shaped storage device, in order to secure a predefined number of sausage-shaped products suspended on said rod-shaped storage device on their desired positions.

In accordance with the design of the carrier device, or independently thereof, also the preventing device may comprise more than one preventing means for securing a desired number of sausage-shaped products suspending on a respective rod-shaped storage device.

In an embodiment of the inventive handling apparatus, the carrier device and the preventing device are of at least approximately identical design. In other words, the carrier device and the preventing device have identical numbers of receiving means and preventing means being designed at least approximately identically or having the same shape, identical cross-sectional shapes, e.g. identical U- or L-shaped cross-sections, and identical dimensions, like the length or width. In this embodiment, identical profiles may be used for forming the carrier means and the preventing means, whereby the design of the inventive handling apparatus is simplified and the costs are reduced. For realizing the handling apparatus, this specific carrier device and the preventing device may be arranged mirror-imaged.

In case the design of the receiving means and the preventing means is at least approximately identical, it is of advantage if the receiving means and the preventing means have a rake-shaped design. For example, one receiving means and one preventing means are each formed by two tines arranged parallel and with a distance to each other thus defining a recess for receiving the suspension element of a sausage-shaped product. The tines can be provided with a roof-shaped tip to assist the receiving of the suspension element of a sausage-shaped product. It has to be noted that it is also possible that the rake-shaped design can only be provided for one of the devices, i.e. the receiving means of the carrier device or the preventing means of the preventing device.

Moreover, if the receiving means of the carrier device and the preventing means of the preventing device are of at least approximately identical design, it is of advantage when the receiving means of the carrier device and the preventing means of the preventing device are configured to be arranged in the receiving position such that the receiving means and the preventing means at least approximately align with each other, and are configured to be arranged in the securing position such that the receiving means and the preventing means are offset to each other. It has to be noted that this principle of the arrangement of the receiving means and the preventing means in the receiving position such that they align to each other, and in the securing position such that they are offset to each other, can also be used when the receiving means and the preventing means are not of identical design.

It has to be noted that, in case that the carrier device and the preventing device are provided with more than two receiving means, and more than two preventing means, respectively, the receiving means and the preventing means may be arranged in identical and/or regular intervals. This enables, for example, to receive and secure sausage-shaped products suspended on a rod-shaped element, like a smoking rod, which are suspended in regular intervals on the smoking rods. Dependent on the number of receiving means and preventing means, and the distances therebetween, it is also possible to receive and secure sausage-shaped products which are suspended on the smoking rod in non-regular intervals, e.g. when sausages of different diameter are suspended thereon. In this case, due to the fact that the smoking rod is supported by the carrier device about a large portion of its entire length, or in a specific case, over its entire length, the balance of the smoking rod with the sausages suspended thereon, and which may have different weight, is not of importance for the handling process.

The inventive handling apparatus is provided with connecting means for enabling the carrier device and the preventing device to reversibly be moved relative to each other.

In a preferred embodiment, the connecting means may include at least one pivot lever having a first end and a second end, with the first end pivotally connected to the carrier device and the second end pivotally connected to the preventing device.

According to an alternative design, the connecting means may include guide elements in sliding engagement with each other, with a first guide element connected to the carrier device and a second guide element connected to the preventing device, like a tongue and groove connection. Further alternatively, one of carrier device or preventing device may comprise a protrusion, like a pin or bolt which is guided in a slot in the preventing device, or the carrier device, respectively.

In an advantageous configuration, the carrier device and/or the preventing device for reaching the receiving position and/or the securing position by the reversible relative movement are moved in a direction at least approximately horizontal and perpendicular to the receiving direction. By such a movement, the suspension loops of the sausage-shaped products are clamped between the receiving means of the carrier device and the preventing means of the preventing device. It has to be noted that, in case that only one preventing means, e.g. in the form of a single protrusion or tine is provided, this single preventing means may also be moved on any other suitable moving path, e.g. on a circular path during a pivotal movement in a plane parallel to the plane in which the receiving means are arranged.

In a further advantageous configuration, a coupling means is attached to the handling apparatus, preferably to the carrier device, facing at least approximately in a direction opposite to the receiving direction, for coupling the handling apparatus to a manipulation system. The manipulation system, which may be a robotic device or system, enables an automated use of the handling apparatus.

Alternatively, the handling apparatus may also be handled manually. In this case, suitable operating means may be coupled to the handling apparatus via the coupling means, like a handle or a semi-automatic or motorized operating means which can be operated by an operator.

In a preferred embodiment, the drive means for executing the reversible relative movement between or among the carrier device and the preventing device between the receiving position and the securing position drive the preventing device. However, it is also possible that the carrier device is driven instead of the preventing device. Additionally, it is also possible that each of the devices, i.e. the carrier device and the preventing device are each provided with driving means for driving each of these devices. These drive means, which can be part of the handling apparatus, may be controlled and synchronized by a control unit which can also control the manipulation system for moving the handling apparatus, like a robotic device, when coupled to such an additional system.

Alternatively, the carrier device and/or the preventing device comprises attachment means connectable to an external drive means for executing the reversible relative movement between or among the carrier device and the preventing device between the receiving position and the securing position. In this embodiment of an easier construction, a drive means already present in the system to which the handling apparatus may be coupled, can be used. It has to be understood that respective connectors should be present at the handling apparatus and the system, for transfer the drive forces from the said system to the handling apparatus.

In case that the handling apparatus is coupled to a manipulation system via its coupling means, it is of advantage that the reversible relative movement between the carrier device and preventing device is controlled by a control device of the manipulation system to which the handling apparatus is connected.

In the alternative case that the handling apparatus is used manually, the handling apparatus may be provided with control means for the reversible relative movement between the carrier device and preventing device which can be operated by an operator. In the simplest configuration, switches are provided to activate the respective movement of the carrier device and preventing device.

According to the present invention, there is further provided a method for handling rod-shaped storage devices, like smoking rods, configured to be loaded with sausage-shaped products, like sausages, each having a sausage-shaped body and a suspension element, like a suspension loop, wherein the sausage-shaped products can be suspended on a rod-shaped storage device by their suspension loops, wherein the handling of the rod-shaped storage devices is carried out by a handling apparatus which comprises a carrier device having at least one receiving means and a preventing device having at least one preventing means. The method comprises the steps of moving the handling apparatus in a receiving direction for receiving and supporting a rod-shaped storage device by the carrier device, receiving the suspension element of at least one sausage-shaped product by the receiving means and securing the suspension loop of the at least one sausage-shaped product by executing a relative movement between the carrier device and the preventing device.

According to the inventive method, the step of securing the rod-shaped storage device is executed by a movement of the carrier device and/or the preventing device in a direction at least approximately horizontal and perpendicular to the receiving direction.

The inventive method thereby provides the same advantages as explained in conjunction with the inventive handling apparatus.

Further advantages and preferred embodiments of the present invention will be described in the following together with the drawings listed below. The expressions "left", "right", "below" and "above" used in the following description, are referred to the drawings in an alignment such that the reference numbers and the notation of the figures used can be read in normal orientation.

In the drawings:
- Fig. 1:: is a perspective view to the rear side of a first embodiment of a handling apparatus for handling a rod-shaped storage device according to the present invention;
- Fig. 2:: is a perspective view of the front side of the handling apparatus shown in Fig. 1;
- Fig. 3:: is a schematic side view of the handling apparatus according to Fig. 1;
- Fig. 4:: is a perspective front view to the lower side of a second embodiment of a handling apparatus for handling a rod-shaped storage device according to the present invention;
- Fig. 5:: is a perspective front view to the upper side of the handling apparatus shown in Fig. 4;
- Fig. 6:: is a schematic side view of the handling apparatus according to Fig. 4;
- Fig. 7a:: schematically shows the handling apparatus according to Figs. 1 and 4 in a receiving position; and
- Fig. 7b:: schematically shows the handling apparatus according to Figs. 1 and 4 in a securing position.

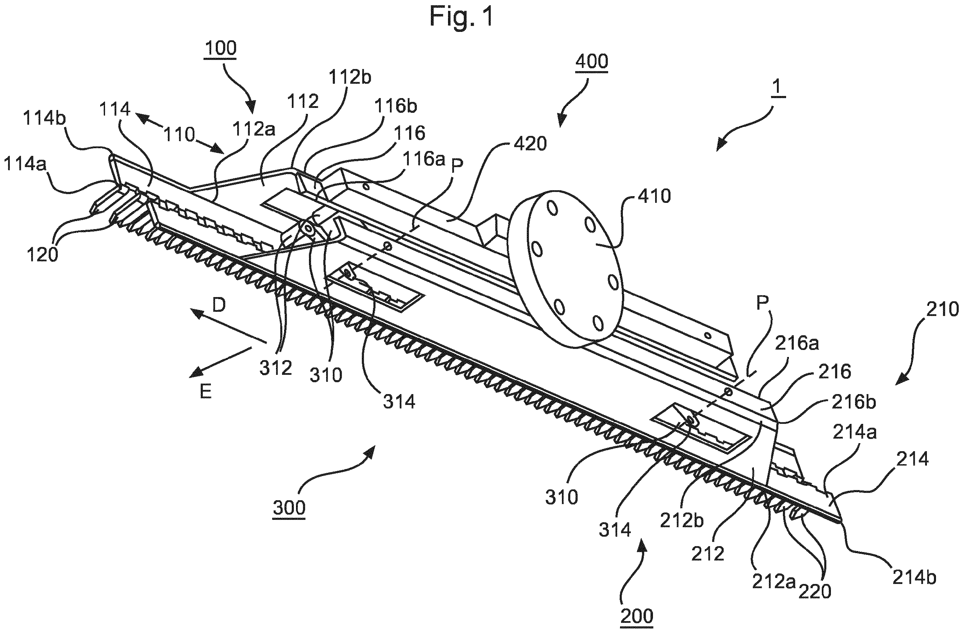

Fig. 1 is a schematic and perspective view to the rear side of a first embodiment of an inventive handling apparatus 1 for handling a rod-shaped storage device R, like a smoking bar, carrying several sausage-shaped products S, like sausages, suspended on said rod-shaped storage device R via suspension elements L, like suspension loops, each being attached at one end of a respective sausage-shaped product S by a fastening means, like a clip.

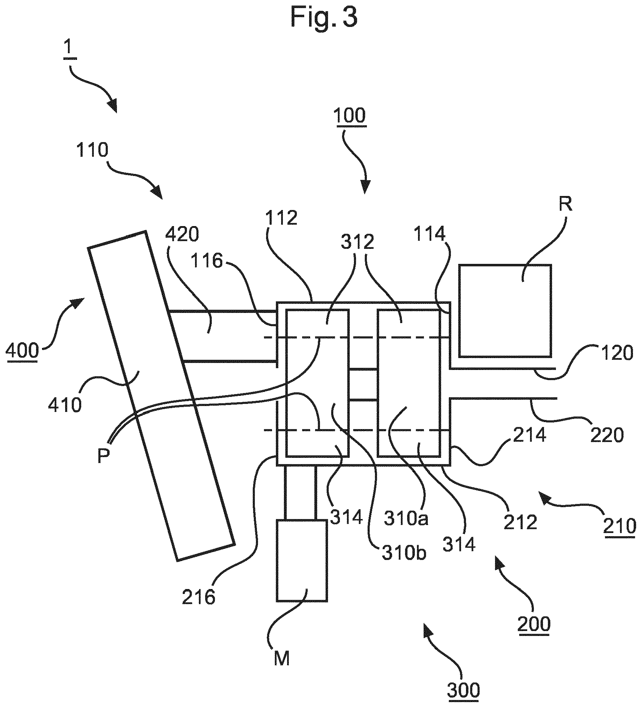

As can be seen in Figs. 1 and 3, handling apparatus 1 for handling a rod-shaped storage device R comprises a carrier device 100, a preventing device 200, connecting means 300 and coupling means 400.

Carrier device 100 comprises an approximately U-shaped profile, which forms a base portion or body 110 of carrier device 100, having a bottom portion 112 with a first longitudinally extending edge 112a and a second longitudinally extending edge 112b, a first side portion 114 with a first longitudinally extending edge 114a and a second longitudinally extending edge 114b as well as a second side portion 116 with a first longitudinally extending edge 116a and a second longitudinally extending edge 116b. Bottom portion 112 is connected with its first longitudinally extending edge 112a to second longitudinally extending edge 114b of first side portion 114, and with its second longitudinally extending edge 112b to second longitudinally extending edge 116b of second side portion 116. Carrier device 100 is arranged such that the open end of the "U" is directed downwardly so that bottom portion 112 forms a roof.

Carrier device 100 further comprises protrusions in the form of tines 120 which extend from first longitudinally extending edge 114a of first side portion 114 of U-shaped body 110 of carrier device 100, and in an receiving direction E, whereas body 110 of carrier device 100 extends in a direction D, vertically to receiving direction E. Receiving direction E and extension direction D of body 110 of carrier device 100 define a plane which is preferably at least approximately horizontally aligned during the use of the inventive handling apparatus.

Protrusions or tines 120 are arranged parallel to each other and with a gap between two adjacent tines 120. Tines 120 of carrier device 100, and in particular, the gaps there between, form the receiving means, as it will be explained in greater detail below. Moreover, first side portion 114 and upper surface of tines 120 form supporting means for supporting a rod-shaped storage device R when handled by the inventive handling apparatus 1. First side portion 114 forms an abutment for the rod-shaped storage device R so that the position of the storage device R is precisely defined when handled by the handling apparatus 1.

Preventing device 200 comprises an approximately U-shaped profile, which forms a base portion or body 210 of preventing device 200, having a bottom portion 212 with a first longitudinally extending edge 212a and a second longitudinally extending edge 212b, a first side portion 214 with a first longitudinally extending edge 214a and a second longitudinally extending edge 214b as well as a second side portion 216 with a first longitudinally extending edge 216a and a second longitudinally extending edge 2116b. Bottom portion 212 is connected with its first longitudinally extending edge 212a to second longitudinally extending edge 214b of first side portion 214, and with its second longitudinally extending edge 212b to second longitudinally extending edge 216b of second side portion 216. Preventing device 200 is arranged such that the open end of the "U" is directed upwardly.

Preventing device 200 further comprises protrusions in the form of tines 220 which extend from first longitudinally extending edge 214a of first side portion 214 of U-shaped body 210 of preventing device 200, and in receiving direction E, whereas body 210 of preventing device 200 extends in direction D, vertically to receiving direction E.

Tines 220 of preventing device 200 are arranged at least approximately parallel to each other. Tines 220 form the preventing means, as it will be explained in greater detail below.

Handling apparatus 1 further includes connecting means 300. In the embodiment shown in Fig. 1, connecting means 300 include two levers 310, each having a first end 312 and a second end 314. First ends 312 of levers 310 are coupled or connected to body 110 of carrier device 100, and second ends 314 are coupled or connected to body 210 of preventing device 200, with the first ends 312 of levers 310 are arranged in the U-shaped profile of body 110 of carrier device 100 and the second ends 314 arranged in the U-shaped profile of body 210 of preventing device 200.

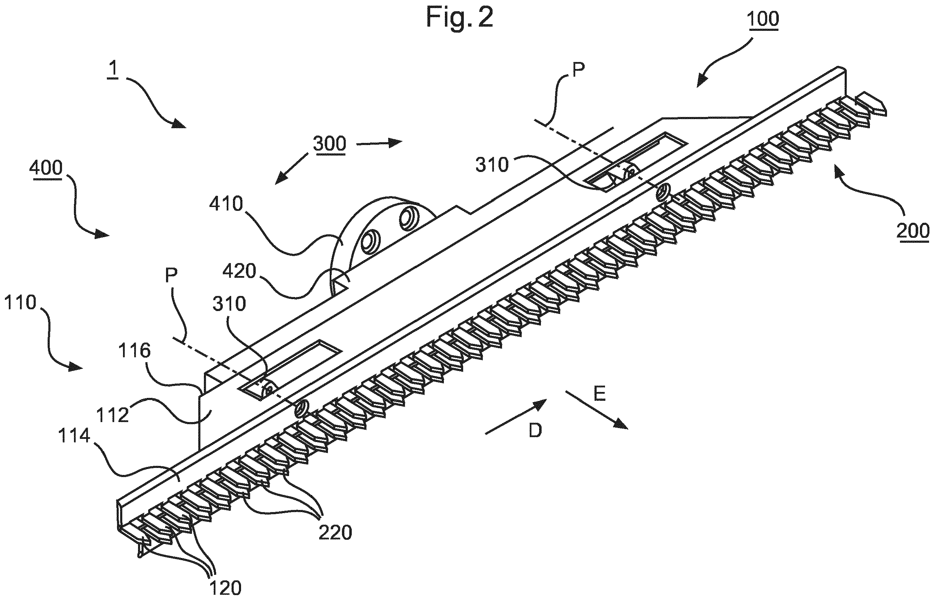

The connection between levers 310 and carrier device 100 and preventing device 200, respectively, may be realized by axles, screws or bolts, which extend through respective holes in side portions 114, 116, 214, 216 of bodies 110, 210 of carrier device 100 and preventing device 200, and through respective holes in the first and second ends 312, 314 of levers 310. The axles, bolts or screws (not shown), include pivot axis P (see Figs. 2 and 3) which are aligned in receiving direction E.

Levers 310 are of identical length and the pivot points in bodies 110, 210 of carrier device 100 and preventing device 200 are arranged vertically above each other. This construction enables a relative movement between carrier device 100 and preventing device 200 in direction D. Since levers 310 are of identical length, carrier device 100 and preventing device 200 are arranged parallel to each other in each position during the reversible relative movement.

Handling apparatus 1 according to the embodiment of Fig. 1 comprises coupling means 400 including a flange-shaped portion or flange 410 and a bar-shaped portion or bar 420. Bar 420 is mounted to the outer surface of second side portion 216 of preventing device 200, and extends in direction D. Flange 410 is coupled to bar 420 via a connection portion, and faces away from carrier device 100.

Fig. 2 is a schematic and perspective view to the front side of the handling apparatus 1 according to Fig. 1.

As explained above in conjunction with Fig. 1, carrier device 100 has an approximately U-shaped body 110 with bottom portion 112, first side portion 114 and second side portion 116, with the open end of the "U" is directed downwardly. Tines 120 extend from first longitudinally extending edge 114a of first side portion 114 of U-shaped body 110 in receiving direction E.

As it further can be seen, in Figs. 1 and 2, bottom portion 112, first side portion 114 and second side portion 116 are of different length. In particular, bottom portion 112 is shorter than first side portion 114, and second side portion 116 is shorter than bottom portion 112. Bottom portion 112 has the shape of a regular trapeze with the longer base line facing towards first side portion 114 which exceeds bottom portion 112 on both sides, and with the shorter base line directed towards second side portion 116 which are of identical length. Bottom portion 112 and side portions 114, 116 are symmetrically arranged such that the ends of first side portion 114 which exceed bottom portion 112, are of identical length.

As further explained in conjunction with Fig. 1, carrier device 100 and preventing device 200 of handling apparatus 1 of the shown embodiment are of identical designs, but arranged mirror-imaged. Accordingly, also bottom portion 212, first side portion 214 and second side portion 216 are of different length, in particular, the end portions of first side portion 214 which exceed bottom portion 212 of preventing device 200, are of identical length, and have the same length as the end portions of first side portion 114 bottom portion 112.

According to Fig. 2, carrier device 100 and preventing device 200 are arranged such that tines 120 of carrier device 100 are arranged vertically above and with a small distance to tines 220 of preventing device 200. That means, also the gaps between tines 120 and 220 are arranged above each other. This position may be one of the possible engagement positions. The vertical distance between tines 120, 220 of carrier device 100 and preventing device 200 can be such that the suspension elements L can be arranged between the upper surfaces of tines 220 of the preventing means 200 and the lower surfaces of tines 120 of carrier device 100 without damaging the suspension elements L of the sausage-shaped products S. Since the thickness of suspension elements L can vary, it is of advantage when the vertical distance between carrier device 100 and preventing device 200 can be adjusted by, for example, an adjustment device (not shown) being provided at handling apparatus 1 and/or by distance pieces provided at the connecting means 300.

Fig. 3 is a schematic side view to the handling apparatus according to Fig. 1, seen from the right side, and with a rod-shaped storage device R positioned thereon.

Carrier device 100 and preventing device 200 are arranged mirror-imaged, such that bottom portions 112, 212 of bodies 110, 210 face away from each other, and first side surfaces 114, 214 and second side surfaces 116, 216 are arranged approximately vertically above each other.

Levers 310 of connecting means 300 extend between carrier device 100 and preventing device 200. First ends 312 of levers 310 are arranged in U-shaped body 110 of carrier device 100 and second ends 314 in U-shaped body 210 of preventing device 200, with pivot axis P extending through first ends 312 and first and second side portions 114, 116 of body 110 of carrier device 100, and pivot axis P extending through second ends 314 of levers 310 and through first and second side portions 214, 216 of body 210 of preventing device 200, and in receiving direction E. The width of levers 310 at least approximately coincides with the inner width of U-shaped bodies 110, 210 of carrier device 100 and preventing device 200.

Levers 310 according to the specific embodiment of Figs. 1 to 3, are realized as double lever, where each lever 310 is formed by a pair of levers 310a, 310b which are arranged parallel to each other and with a gap there between. Each pair of levers 310a, 310b is connected to each other by a respective connection portion for securing lever pairs 310a, 310b in their position to each other, such that each lever 310 is "H" shaped when seen in a side view according to Fig. 3.

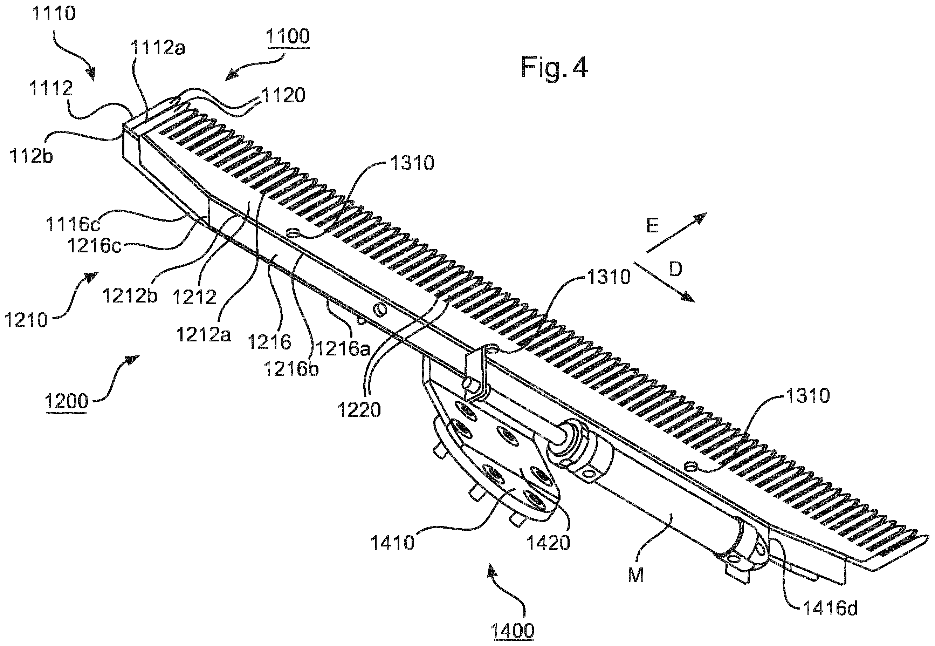

As further can be seen in Fig. 3, drive means M are schematically shown, which are coupled to preventing device 200 for enabling the reversible relative movement between or among carrier device 100 and preventing device 200 between the receiving position shown in Fig. 4a, and the securing position shown in Fig. 4b. In this embodiment, drive means M move preventing device 200 in direction D. Preventing device 200 and carrier device 100, during this reversible relative movement, are maintained in parallel relationship to each other by levers 310.

Drive means M may be realized by various means, like an electric motor which e.g. may be coupled to preventing device 200 by a crank shaft or the like. The coupling between drive means M and preventing device 200 may also be realized by any other suitable means which enable a reversible movement of preventing device 200 relative to carrier device 100.

Moreover, a rod-shaped storage device R, like a smoking rod, is shown in Fig. 3. Rod-shaped storage device or smoking rod R has a rectangular cross-section. Its planar lower side is supported by tines 120 of carrier device 100. The rear side of smoking rod R, that side facing in a direction opposite to receiving direction E, is arranged closed to first side portion 114 of body 110 of carrier device 100.

Fig. 4 is a perspective front view to the lower side of a second embodiment of a handling apparatus 1001 for handling a rod-shaped storage device R, like a smoking bar. Rod-shaped storage device R can carry several sausage-shaped products S, like sausages, suspended on said rod-shaped storage device R via suspension elements L, like suspension loops, each being attached at one end of a respective sausage-shaped product S by a fastening means, like a clip.

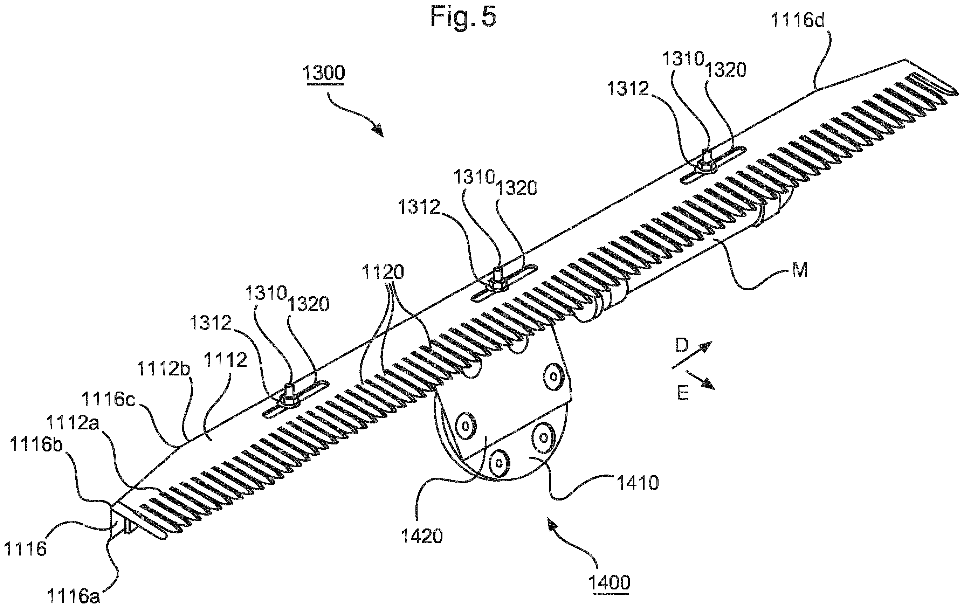

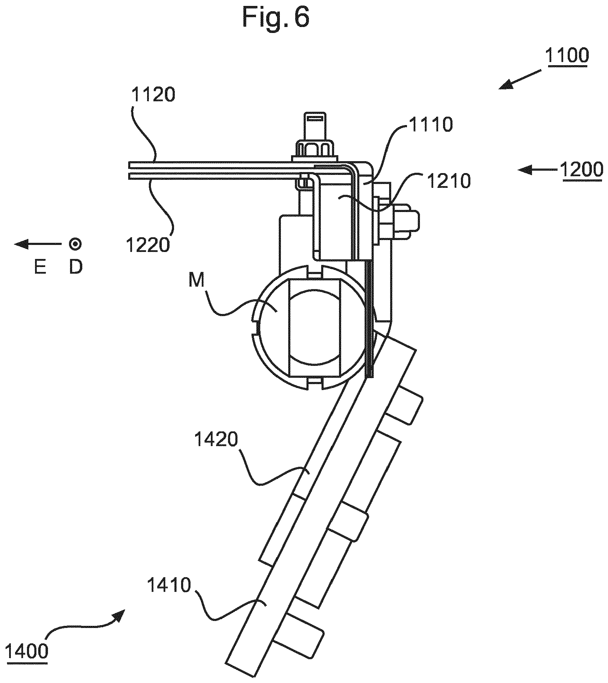

Fig. 5 is a perspective front view to the upper side of handling apparatus 1001 shown in Fig. 4, and Fig. 6 is a schematic side view of handling apparatus 1001 according to Fig. 4.

In the second embodiment of a handling apparatus 1001, elements which have identical functions as explained in conjunction with the first embodiment of handling apparatus 1 shown in Figs. 1 to 3, are provided with identical reference signs, but increased by 1000.

As can be seen in Figs. 4 to 6, handling apparatus 1001 for handling a rod-shaped storage device R comprises a carrier device 1100, a preventing device 1200, connecting means 1300, coupling means 1400 and drive means M.

Carrier device 1100 comprises an approximately L-shaped profile, which forms a body 1110 of carrier device 1100, having a base portion 1112 extending in direction D, with a first longitudinally extending edge 1112a and a second longitudinally extending edge 1112b, a side portion 1116, also extending in direction D, with a first longitudinally extending edge 1116a and a second longitudinally extending edge 1116b. Base portion 1112 is connected with its second longitudinally extending edge 1112b to second longitudinally extending edge 1116b of side portion 1116 such that they form together in a cross-sectional view a reversed letter "L". Carrier device 1100 is arranged such that base portion 1112 is positioned at least approximately horizontally and side portion 1116 is directed at least approximately vertically and downwardly.

As further can be seen in Fig. 5, the width of base portion 1112 of body 1110 of carrier device 1100, which is the dimension of base portion 1112 in direction E, is not constant over its length, which is its dimension in direction D. In the region of its left and right ends, according to Figs. 4 and 5, the width of base portion 1112 in the region of its ends is constantly reduced towards its ends. First longitudinal edge 1112a forms a straight line, whereas the end portions of second longitudinal edge 1112b, which also form a straight line, are angled towards first longitudinal edge 1112a. The middle portion of second longitudinal edge 1112b is aligned approximately parallel to first longitudinal edge 1112a. Thereby, two break-points are formed in second longitudinal edge 1112b of base portion 1112.

Side portion 1116 is connected with its second longitudinal edge 1116b to second longitudinal edge 1112b of base portion 1112. That means that side portion 1116 is angled accordingly, whereby side portion 1116 has edges 1116c, 1116d extending vertically to base portion 1112 from the break-points in second longitudinal edge 1112b.

Carrier device 1100 further comprises protrusions in the form of tines 1120 which extend from first longitudinally extending edge 1112a of base portion 1112 of L-shaped body 1110 of carrier device 1100, and in receiving direction E, whereas body 1110 of carrier device 1100 extends in a direction D, vertically to receiving direction E. Also in the second embodiment of handling apparatus 1001, receiving direction E and extension direction D of body 1110 of carrier device 1100 define a plane which is preferably at least approximately horizontally aligned during the use of the inventive handling apparatus 1001.

Protrusions or tines 1120 are arranged parallel to each other and with a gap between two adjacent tines 1120. Tines 1120 of carrier device 1100, and in particular, the gaps therebetween, form the receiving means, as it will be explained in greater detail below. Moreover, base portion 1112 and upper surface of tines 1120 form supporting means for supporting a rod-shaped storage device R when handled by the inventive handling apparatus 1001.

Preventing device 1200 comprises an approximately L-shaped profile, which forms a body 1210 of preventing device 1200, having a base portion 1212 with a first longitudinally extending edge 1212a and a second longitudinally extending edge 1212b, a side portion 1216 with a first longitudinally extending edge 1216a and a second longitudinally extending edge 1216b. Base portion 1212 is connected with its second longitudinally extending edge 1212b to second longitudinally extending edge 1216b of side portion 1216 such that they form together in a cross-sectional view a reversed letter "L". Preventing device 1200 is arranged such that base portion 1212 is positioned at least approximately horizontally and side portion 1216 is directed at least approximately vertically and downwardly.

In accordance with the design of carrier device 1100, also the width of base portion 1212 of body 1210 of preventing device 1200, i.e. its dimension in direction E, is reduced in the region of its ends. That means, also the end portions of second longitudinal edge 1212b of base portion 1212, which also form a straight line, are angled towards first longitudinal edge 1212a, thereby forming two break-points in second longitudinal edge 1212b of base portion 1212.

Further in accordance with the design of carrier device 1100, also side portion 1216 of body 1210, which is connected with its second longitudinal edge 1216b to second longitudinal edge 1212b of base portion 1212, is angled accordingly, whereby side portion 1216 also has edges 1216c, 1216d extending vertically to base portion 1212 from the break-points in second longitudinal edge 1212b.

The angle between longitudinal edge 1112a and angled portion of longitudinal edge 1112b of base portion 1112 of body 1110 of carrier device 1100 is at least approximately identical to the angle between longitudinal edge 1212a and angled portion of longitudinal edge 1212b of base portion 1212 of body 1210 of preventing device 1200. That means that the angled portions of side portions 1116 and side portion 1216 are arranged approximately parallel to each other, in order to enable a maximal relative movement between carrier device 1100 and preventing device 1200, and in order to prevent carrier device 1100 and preventing device 1200 from getting jammed.

Preventing device 1200 further comprises protrusions in the form of tines 1220 which extend from first longitudinally extending edge 1212a of base portion 1212 of L-shaped body 1210 of preventing device 1200, and in receiving direction E, whereas body 1210 of preventing device 1200 extends in direction D, vertically to receiving direction E.

Tines 1220 of preventing device 1200 are arranged at least approximately parallel to each other. Tines 1220 form the preventing means, as it will be explained in greater detail below.

As further can be seen in Figs. 4 to 6, carrier device 1100 and preventing device 1200 are arranged such that the lower surface of base portion 1112 of body 1110 of carrier device 1100 is arranged parallel to and comes in contact with the upper surface of base portion 1212 of body 1210 of preventing device 1200. Moreover, also the front surface of side portion 1116 of body 1110 of carrier device 1100 is arranged parallel to and comes in contact with the rear surface of side portion 1216 of body 1210 of preventing device 1200.

Due to the design of the end portions of carrier device 1100 and preventing device 1200, their cross-sectional profile in the region of their ends is reduced, such that an insertion of handling apparatus 1001 into a storage frame is eased, and the required space for inserting handling apparatus 1001 into a storage frame is reduced.

It has to be noted that the end portions of side portions 1116, 1216 extending from the break points towards the ends of bodies 1110, 1210 of carrier device 1100 and preventing device 1200, support the stability of carrier device 1100 and preventing device 1200. Since a smoking rod R filled with sausages S is supported approximately over its entire length by carrier device 1100, naturally, the end portions of side portions 1116, 1216 may also be omitted for realizing a more simple construction of carrier device 1100 and preventing device 1200.

In Figs. 4 and 5, handling apparatus 1001 is shown in a neutral position, with carrier device 1100 and preventing device 1200 arranged parallel and closed to each other, and with carrier device 1100, which is slightly longer than preventing device 1200, extending preventing device 1200 on both ends approximately about the same length.

Handling apparatus 1001 further includes connecting means 1300. In the second embodiment shown in Figs. 4 to 6, connecting means 1300 include bolts 1310 connected with their lower ends to base portion 1212 of body 1210 of preventing device 1200. Bolts 1310 extend vertically upwardly from base portion 1212 through slots 1320 in base portion 1112 of body 1110 of carrier device 1100. For securing carrier device 1100 and preventing device 1200 in their position relative to each other, securing nuts 1312 are screwed onto bolts 1310.

Slots 1320 are arranged in a row and aligned parallel to longitudinal edge 1112a of base portion 1112. In the neutral position of handling apparatus 1001, slots 1320 are arranged such that bolts 1310 are positioned centrally in slots 1320, in order to enable a reversible relative movement between carrier device 1100 and preventing device 1200 in direction D.

Handling apparatus 1001 according to the embodiment of Figs. 4 to 6 comprises coupling means 1400 including a flange-shaped portion or flange 1410 and a plate-like connection portion 1420. Connection portion 1420 is mounted to the rear surface of side portion 1116 of carrier device 1100, and extends downwardly therefrom. Flange 1410 is coupled to the lower region of connection portion 1420, and faces away from carrier device 1100, i.e. opposite to tines 1120, 1220. Connection portion 1420 is angled such that flange 1410 is arranged in an angle relative to side portion 1116 of carrier device 1100.

Handling apparatus 1001 according to the embodiment of Figs. 4 to 6 further comprises a drive means M in the form of a piston/cylinder arrangement. Drive means or piston/cylinder arrangement M is coupled with one of its ends to carrier device 1100 and with its respective other end to preventing device 1200, for driving carrier device 1100 and preventing device 1200 relative to each other in direction D.

In the embodiment of Figs. 4 and 5, carrier device 1100 is coupled to coupling means 1400 which, for example, may be connected to a robotic device of a handling system. Thus, when activating piston/cylinder arrangement M, preventing device 1200 is moved relative to carrier device 1100. Naturally, it is also possible that preventing device 1200 is coupled to coupling means 1400. In this case, when activating piston/cylinder arrangement M, carrier device 1100 is moved relative to preventing device 1200.

It has also to be understood that drive means M may be realized by any other suitable drive, like a pneumatic piston/cylinder drive or an electric drive.

As can be seen in Fig. 6 which is a schematic side view of handling apparatus 1001 according to Figs. 4 and 5, the free ends of tines 1120 and tines 1220 are arranged vertically above each other. Moreover, tines 1120, 1220 have the same length. That means that tines 1120 and 1220, when arranged vertically above each other, are congruent. Thus, also the gaps between to adjacent tines 1120, 1220, in this situation, are congruently arranged above each other, as it can be seen in Figs. 4 and 5.

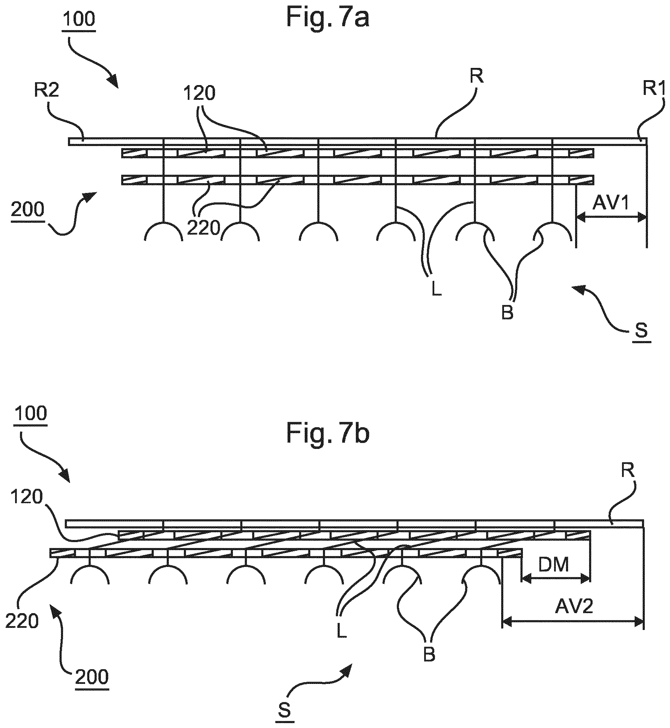

Fig. 7a schematically shows in principal handling apparatus 1 according to Figs. 1 or 4 in the receiving position whereas Fig. 7b schematically shows in principle handling apparatus 1 in the securing position. For clarification matter, only tine 120, 220 of carrier device 100 and preventing device 200 are shown.

The principle function of handling apparatus 1 shown in Figs. 1 to 3 and as explained in conjunction with Figs. 7a and 7b applies to handling apparatus 1001 according to the second embodiment as shown in Figs. 4 to 6 accordingly. Thus, the function of the inventive handling apparatuses 1, 1001 is explained in the following in conjunction with handling apparatus 1.

In contrast to the first embodiment of handling apparatus 1 according to Figs. 1 to 3, in the second embodiment of handling apparatus 1001 according to Figs. 4 to 6, the relative movement between carrier device 1100 and preventing device 1200 is achieved by drive means M which directly moves carrier device 1100 and preventing device 1200, whereas in the embodiment of handling apparatus 1, the relative movement between carrier device 100 and preventing device 200 of handling apparatus 1 is realized by driving levers 320.

In the engagement or receiving position as shown in Fig. 7a, tines 120, 220 of carrier device 100 and preventing device 200 are arranged approximately vertically above each other. Accordingly, also the gaps between tines 100 and tines 200 are arranged vertically above each other and align with each other. The gap defined between a pair of two tines 120, 220 forming one receiving means 120 and preventing means 220 in the horizontal direction, is such that suspension elements L of different thickness can be received securely in the receiving means 120 and the preventing means 220.

A smoking rod R with sausage-shaped products S, like sausages, suspended thereon, is supported on tines 120 of carrier device 100. Each sausage-shaped product or sausage S has a sausage-shaped body B with a suspension element L, like a suspension loop, attached to one of its ends, preferably, its upper end. In Figs. 7a, 7b, only the upper ends of sausage-shaped bodies B of sausages S with suspension loops L attached thereto are shown. Sausages S are suspended on smoking rod R in regular intervals by their suspension loops L. Each suspension loop L extends from smoking rod R vertically downwardly through the vertically aligned gaps between two adjacent tines 120, 220 of carrier device 100 and preventing device 200. The intervals between two adjacent sausages S, in the principle presentation of Figs. 4a, 4b, coincide with the distances between two adjacent tines 120, 220 of carrier device 100 and preventing device 200.

Smoking rod R has a first end R1, which is the right end in Figs. 7a, 7b, and a second end R2, the left end in Figs. 4a, 4b. Right and left ends R1, R2 of smoking rod R extend over the left and right side of carrier device 100 about the approximately the same length.

As can be seen in Fig. 7a, in accordance with the position of the outermost sausage S on smoking rod R, there is an available space AV1 left between the outermost surface of sausage-shaped body B of sausage S and the outer end of smoking rod R. In Fig. 7a, available space AV1 is shown between right end R1 of smoking rod R and the sausage-shaped body B of the rightmost sausage S.

In the securing position as shown in Fig. 7b, preventing device 200 has been moved relative to carrier device 100, in particular, preventing device 200 has been moved to the left about a movement distance DM.

Due to this movement, also sausage-shaped bodies B of sausages S have been moved about movement distance DM to the left. While the storage positions of suspension loops L on smoking rod R have been maintained, secured by the receiving means 120, suspension loops L have been deformed into a step-shape or zig-zag shape, with the uppermost end of suspension loop L on the storage place on smoking rod R as a first approximately vertical portion, the lowermost end of suspension loop L being attached to sausage-shaped body B of sausage S as a second approximately vertical portion, and a third portion , the shaped portions extending between the first and second approximately vertical portions.

Carrier device 100 has been left in its position, at least in relation to smoking rod R, whereas preventing device 200 has been moved relative to carrier device 100. As shown in Fig. 7b, preventing device 200 has been moved about distance DM to the left. Accordingly, the available space between right end R1 of smoking rod R and the outermost surface of sausage-shaped body B of the rightmost sausage S has been enlarged from AV1 into AV2, namely about the distance of movement DM of preventing device 200 relative to carrier device 100.

In the production and for the further treatment of sausage-shaped products, like sausages S, the sausages S, after being produced, are suspended to a rod-shaped storage device, like a smoking rod R, in a suitable apparatus, like a hanging line. Smoking rod R with sausages S stored thereon, is removed from the hanging line and hung up in a storage frame, for further treatment, like smoking or cooking. A storage frame conventionally comprises vertically arranged corner posts and horizontally arranged pairs of carriages which extend between the front corner posts and the rear corner posts, and which define a storage plane in which a predefined number of smoking rods R may be stored, e.g. dependent on the number and/or diameter of the sausages S to be stored. In the storage frame, smoking rods R are positioned such that its ends R1, R2 are supported on said pairs of parallel carriages. Smoking rods R positioned in the storage frame are aligned parallel to each other.

For removing a smoking rod R with sausages S stored thereon, from a hanging line, and for inserting said smoking rod R into a storage frame, handling apparatus 1 is brought into the engagement position, like shown in Fig. 7a, positioned in front of the hanging line and moved in receiving direction E such that tines 120 of carrier device 100 and tines 220 of preventing means 200 are positioned immediately below smoking rod R. Suspension loops L of sausages S are received in the gaps between two adjacent tines 120 of carrier device 100 and tines 220 of preventing device 200. Said gaps together with respective tines 120, 220 thereby form the receiving means 120 and preventing means 220 according to the present invention. During receiving smoking rod R, said smoking rod R may abut against first side portion 114 of body 110 of carrier device 100. Thereby, the position of smoking rod R on tines 120 may be adjusted. Thereafter, handling apparatus 1 is lifted upwardly for removing smoking rod R with sausages S stored thereon from the hanging line. During the lifting movement, smoking rod R is positioned on and supported by carrier device 100, in particular by tines 120 of carrier device 100. Furthermore, by tilting backwardly handling apparatus 1, which means lifting tines 120, 220 relative to coupling means 400 and/or lowering coupling means 400 relative to tines 120, 220, smoking rod R may further be secured on handling apparatus 1 against unintentional shifting or slipping-off.

For securing sausages S in their position on smoking rod R, preventing device 200 is moved in direction D, whereby suspension loops L are deformed into a stepped shape as described above.

Drive means or drive M is activated for pivoting levers 310 about their first ends 312. Second ends 314 of levers 310 are moved on an arc about pivot axis P of first ends 312. Due to the fact that levers 310 have identical length and that pivot axis P of first and second ends 312, 314 if levers 310 are arranged vertically above each other, that means pivot axis P of carrier device 100 and preventing device 200, respectively, are positioned with identical distances to each other, carrier device 100 and preventing device 200 are arranged parallel to each other during the complete relative movement.

During the relative movement between carrier device 100 and preventing device 200 from the receiving position into the securing position, the uppermost end of suspension loops L remain in their position on smoking rod R, whereas the lowermost portions of loops L attached to bodies B of sausages S are shifted in direction D about movement distance DM. The middle portions of suspension loops L are arranged approximately horizontally or incline from carrier device 100 towards preventing device 200, dependent on the distance between carrier device 100 and preventing device 200 in the securing position.

In the securing position, smoking rod R is supported by tines 120 of carrier device 100, and secured in position, particular against lateral movement, by the weight of sausages S suspended thereto which acts vertically downwardly via suspension loops L on smoking rod R.

In the securing position, the available space between first end R1 of smoking rod R and the outermost surface of sausage-shaped body B of the outermost sausage S has been extended from AV1 (see Fig. 7a) to AV2 (see Fig. 7b) about the distance of movement DM.

For inserting smoking rod R with sausages S stored thereon, into a storage frame, smoking rod R positioned slightly higher than the storage plane or the upper edge of the respective pair of carriages on which smoking rod R has to be stored, and smoking rod R is swiveled in an approximately horizontal plane such that first end R1 directs towards the storage frame. Smoking rod R may now be inserted into the storage frame. Immediately after first end R1 of smoking rod R has passed the right front corner post of the storage frame, smoking rod R with its end R1 may be moved in its longitudinal direction about a length at least approximately corresponding to available space AV2, thereby first end R1 extends over the respective carriage and laterally outside of the storage frame.

The length of storage rod R remaining between the front corner posts of the storage frame is now shorter than the distance between the front corner posts of the storage frame. Smoking rod R is swiveled back about a vertical axis arranged at least approximately in the region of first end R1 of smoking rod R, that means into a position parallel to the front corner posts of the storage frame, i.e. in an angle of approximately 90° with respect to the carriages. Smoking rod R is now positioned inside the storage frame, but with first end R1 extending the side surface of the storage frame. Accordingly, smoking rod R is now moved in direction D towards its second end R2 about such a distance that smoking rod R is symmetrically positioned in the storage frame. At the same time, carrier device 100 and preventing device 200 are moved into the receiving position, such that sausages S are hanging vertically downwardly below their initial storage position on smoking rod R. Finally, smoking rod R with sausages S stored thereon may be moved in receiving direction E until its final position on the carriages is reached. By lowering handling apparatus 1, smoking rod R will be placed on its desired position on the carriages of the storage frame.

The above described method of inserting smoking rod R into a storage frame allows smoking rods R of one storage plane subsequently to be placed in their desired final position without shifting smoking rods R already positioned on the carriages. Since each smoking rod R may be inserted into the storage frame immediately behind its front corner posts, no additional space inside the storage frame is necessary for inserting a smoking rod R and none of the smoking rods R already stored therein need to be shifted and replaced, respectively.

The insertion of smoking rod R into the storage frame directly behind the front corner posts, is supported by the specific construction of carrier device 100 and preventing device 200, namely by providing carrier device 100 and preventing device 200 in the form of U-shaped profiles which include extended first side portions 114, 214 relative to the bottom portions 112, 214 and second side portions 116, 216, whereby the width of the end portions of carrier device 100 and preventing device 200 is reduced such that a smoking rod R may be inserted into a storage frame immediately behind its front corner posts.

This specific shape of levers 310 and the specific design of carrier device 100 and preventing device 200 formed by U-shaped profiles, allows to reduce the weight of handling apparatus 1, and further to reduce the costs, like the manufacturing costs when using identical parts, or the material costs by reducing the overall mass of material.

As explained in conjunction with Figs. 1 to 4, carrier device 100 and preventing device 200 include a plurality of tines 120, 220, whereby two adjacent tines 120 of carrier device 100, and in particular the gap there between, form the receiving means, and tines 220 of preventing device 200 form the preventing means.

Tines 120, 220 and the gaps there between may be of identical width such that when carrier device 100 and preventing device 200 are moved into the securing position, tines 220 of preventing device 200 engage into the gaps between tines 120 of carrier device 100. Thereby an additional clamping force may be generated for further securing sausages S on smoking rod R and smoking rod R itself.

However, in the securing position, carrier device 100 and preventing device 200 not necessarily need to come in contact for securing sausage S on smoking rod R. A distance between carrier device 100 and preventing device 200 may be left. Smoking rod R may sufficiently be secured on carrier device 100 by the weight of sausages S stored thereon.

In case that a plurality of receiving means 120 and a plurality of preventing means 220 are provided, the number of receiving means 120 and preventing means 220 not necessarily needs to be identical. Moreover, the number of receiving means 120 and preventing means 220 may correspond to the maximum number of sausages S which may be stored on a smoking rod R, but may also be smaller or larger, e.g. in order to enable different arrangements of sausages S on the smoking rod R.

It has to be understood that in a simple case, only one receiving means 120 formed by two adjacent tines 120 or a single gap, and one single preventing means 220 formed by a single protrusion, may be sufficient. In this case, the sausage-shaped body B of only one sausage S, preferably the outermost sausage S in the region of right end R1 of smoking rod R, is shifted in direction D, to reach the same effect of extending available space AV1 into extended available space AV2.

Furthermore, particular in view of the receiving means 120 of carrier device 100, it is not necessary to provide a plurality of tines 120 on body 110 of carrier device 100. Receiving means 120 may also be provided by recesses formed that portion of carrier device 100, which carries smoking rod R.

Also, carrier device 100 and preventing device 200 not necessarily need to be formed by U-shaped profiles. Carrier device 100 and preventing device 200 may also be formed from solid material profiles, or may be assembled from single sheet materials which are screwed or welded or the like.

Connecting means 300 which are realized by levers 310 each comprising a pair of parallel levers 310a, 310b, are also only one possible embodiment of the connecting means. Single solid levers or rectangular frames acting as levers, may be used. It is essential to the connecting means to enable reversible relative movement between carrier device 100 and preventing device 200 in direction D. Such a connection may also include linear guide means for reversibly guiding carrier device 100 and preventing device 200 relative to each other in direction D. A simple form of such guide means is a dove-tailed guide. In such cases, a first guide means is attached to carrier device 100 and the respective second or counter guide means is attached to preventing device 200. Naturally, also any other suitable form of guide means may be used.

Drive means M in the form of an electric motor which is coupled to preventing device 200, may also realized by any suitable alternative drive, e.g. fluid drives, like pneumatic cylinders.

Drive means, when being part of handling apparatus 1, may be coupled to the outside of one of carrier device 100 or preventing device 200. Naturally, drive M may also be positioned inside handling apparatus 1, particularly between carrier device 100 and preventing device 200. Drive means M may be supported by coupling means 400, like to flange 410 or bar 420, and functionally coupled to one of carrier device 100 or preventing device 200 for enabling the relative movement there between.

It has to be understood that a reversible relative movement between carrier device 100 and preventing device 200 may also be realized by moving carrier device 100 only, or by moving both, carrier device 100 and preventing device 200. Accordingly, the drive means may also coupled to carrier device 100, or both, carrier device 100 and preventing device 200.

Further alternatively, the manipulation system to which handling apparatus 1 may be coupled, may provide a drive for relatively reversibly moving carrier device 100 and preventing device 200. The drive force may be submitted to handling device 1 by a respective shaft, like a cardan shaft, or a pivot lever with a free end engaging one of carrier device 100 and preventing device 200, or by any other suitable transmitting means.

Smoking rod R has been described as having a rectangular cross section. In the embodiment according to Figs. 1 to 3, in which tines 120 of carrier device 100 extend in a plane and have an approximately planar upper support surface, only the lower side of smoking rod R needs to be planar. Smoking rod R may of any suitable cross-section, like a star-shaped, a triangular or semicircular cross-section. The shape of the support surface, like the tines 120, of carrier device 100 may also have any other than a planar surface, like a convex surface enabling the support of smoking rods R with a circular cross-section.

As explained above, a control unit may be provided for generally controlling the relative movement between carrier device 100 and preventing device 200, like the time points of start and end of the reversible relative movement. Said control unit may also control the length of the distance of movement DM, for controlling the final length of extended available space AV2, e.g. in adaption to the sausage-shaped products S or the kind of smoking rods R or storage frames.

According to the embodiment of handling apparatus 1 of Figs. 1 to 3, two levers 310 are provided. Naturally also a single lever may connect carrier device 100 and preventing device 200. In this case, the parallel alignment of carrier device 100 and preventing device 200 during their movement relative to each other has to be ensured by additional means. In a simple case, the drive means M may support carrier device 100 and preventing device 200 in parallel relationship. Naturally, e.g. dependent on the length of carrier device 100 and/or preventing device 200 in direction D, more than two levers may be provided.

Furthermore, in order to adapt handling device 1 according to the embodiment of Figs. 1 to 3, to different sausage-shaped products, the connecting means 300, in particular, levers 300, may be provided as replacement parts. Replacement levers may e.g. be longer for providing more extended available space AV2 than standard levers. Naturally, also shorter levers or levers of other contours, like curved or angled, may be used.

In Figs. 1 and 2, openings in bottom portion 112 of body 110 are provided. Accordingly, levers including an elongated hole or a slot at their first ends may be used, and which, in adaption of the distance between carrier device 100 and preventing device 200 and thus, the length of the extended available space AV2, may extend through said openings. Naturally, also second ends of such levers may be provided with elongated holes for adjusting the distance between carrier device 100 and preventing device 200.

In the handling apparatus 1001 according to Figs. 4 to 6, carrier device 1100 is formed by an L-shaped body 1110 with an at least approximately horizontally arranged base portion 1112. It has to be noted that body 1110 may also comprise a rim-like edge extending approximately vertically upwardly and along first longitudinal edge 1112a of base portion 1112. This rim provides an abutment for the rod-shaped storage device or smoking rod R, for supporting the positioning of smoking rod R on carrier device 1100 of handling apparatus 1001.

## Claims

1. A handling apparatus for handling rod-shaped storage devices (R), like smoking rods, configured to be loaded with at least one sausage-shaped product (S), like a sausage, having a sausage-shaped body (B) and a suspension element (L), like a suspension loop, wherein the at least one sausage-shaped product (S) can be suspended on a rod-shaped storage device (R) by their suspension elements (L),
the handling apparatus (1) comprises:
a carrier device (100, 1100) including supporting means (114, 1112) for supporting a rod-shaped storage device (R) and at least one receiving means (120, 1120) oriented in a receiving direction (E) and configured to receive a suspension element (L) of the at least one sausage-shaped product (S) suspended on said rod-shaped storage device (R),
a preventing device (200, 1200) being arranged in an at least approximately vertical direction below the carrier device (100, 1100) and including at least one preventing means (220, 1220) configured to cooperate with the at least one receiving means (120, 1120) of the carrier device (100, 1100) for securing the suspension element (L) of the at least one sausage-shaped product (S) being received in the at least one receiving means (120, 1120) of the carrier device (100, 1100), and
drive means (M) for reversibly enabling a relative movement among the carrier device (100, 1100) and the preventing device (200, 1200) between a receiving position and a securing position.

2. The handling apparatus according to claim 1,
wherein the at least one receiving means (120, 1120) are formed by a recess of the opening which is directed in the receiving direction (E).

3. The handling apparatus according to claim 1 or 2,
wherein the at least one preventing means (220, 1220) are formed by at least one, preferably two protrusions directed in the receiving direction (E).

4. The handling apparatus according to any of claims 1 to 3,
wherein the carrier device (100, 1100) and the preventing device (200, 1200) comprise a plurality of receiving means (120, 1120) and preventing means (220, 1220).

5. The handling apparatus according to claim 4,
wherein the receiving means (120, 1120) of the carrier device (100, 1100) and the preventing means (220, 1220) of the preventing device (200, 1200) are of at least approximately identical design.

6. The handling apparatus according to claim 4 or 5,
wherein the receiving means (120, 1120) of the carrier device (100, 1100) and the preventing means (220, 1220) of the preventing device (200, 1200) are configured to be arranged in the receiving position such that the receiving means (120, 1120) and the preventing means (220, 1220) at least approximately align with each other, and are configured to be arranged in the securing position such that the receiving means (120, 1120) and the preventing means (220, 1220) are at least partially offset to each other.

7. The handling apparatus according to any of claims 1 to 6,
wherein connecting means (300, 1300) for a moveable connection of the carrier device (100, 1100) and the preventing device (200, 1200) are provided.

8. The handling apparatus according to claim 7,
wherein the connecting means (300) include at least one pivot lever (310) having a first end (312) and a second end (314), with the first end (312) pivotally connected to the carrier device (100) and the second end (314) pivotally connected to the preventing device (200).

9. The handling apparatus according to claim 7,
wherein the connecting means (300, 1300) include guide elements in sliding engagement with each other, with a first guide element connected to the carrier device (100, 1100) and a second guide element connected to the preventing device (200, 1200).

10. The handling apparatus according to any of claims 1 to 9,
wherein the carrier device (100, 1100) and/or the preventing device (200, 1200) for the reversible relative movement between the receiving position and the securing position are moved in a direction at least approximately horizontal and perpendicular to the receiving direction (E).

11. The handling apparatus according to any of claims 1 to 10,
wherein coupling means (400, 1400) are provided preferably at the carrier device (100, 1100) facing at least approximately in a direction opposite to the receiving direction (E), for coupling the handling apparatus (1, 1001) to a manipulation system.

12. The handling apparatus according to any of claims 1 to 11,
wherein the drive means (M) for executing the reversible relative movement among the carrier device (100, 1100) and the preventing device (200, 1200) between the receiving position and the securing position drive the carrier device (100, 1100) and/or the preventing device (200, 1200).

13. The handling apparatus according to any of claims 1 to 11,
wherein the carrier device (100) and/or the preventing device (200) comprises attachment means connectable to an external drive means for executing the reversible relative movement among the carrier device (100) and the preventing device (200) between the receiving position and the securing position.

14. A method for handling rod-shaped storage devices (R), like smoking rods, configured to be loaded with at least one sausage-shaped product (S), like a sausage, having a sausage-shaped body (B) and a suspension element (L), like a suspension loop, wherein the at least one sausage-shaped product (S) can be suspended on a rod-shaped storage device (R) by its suspension elements (L), wherein the handling of the rod-shaped storage devices (R) is carried out by a handling apparatus (1, 1001) which comprises a carrier device (100, 1100) having at least one receiving means (120, 1120), and a preventing device (200, 1200) having at least one preventing means (220, 1220),
the method comprises the steps of:
- moving the handling apparatus (1, 1001) in a receiving direction (E) for receiving and supporting a rod-shaped storage device (R) by the carrier device (100, 1100);
- receiving the suspension element (L) of the at least one sausage-shaped product (S) by the receiving means (120, 1120); and
- securing the suspension element (L) of the at least one sausage-shaped product (S) by executing a relative movement between the carrier device (100, 1100) and the preventing device (200, 1200).

15. The method according to claim 14,
wherein the step of securing the rod-shaped storage device (R) is executed by a movement of the carrier device (100, 1100) and/or the preventing device (200, 1200) in a direction (D) at least approximately horizontal and perpendicular to the receiving direction (E).

## Patentansprüche

1. Handhabungsvorrichtung für die Handhabung von stangenförmigen Lagereinheiten (R), wie Räucherstangen, die ausgelegt sind, um mit zumindest einem wurstförmigen Produkt (S), wie einer Wurst, das einen wurstförmigen Körper (B) und ein Aufhängelement (L), wie eine Aufhängschlaufe, hat, beladen zu werden, wobei das zumindest eine wurstförmige Produkt (S) an einer stangenförmigen Lagereinheit (R) an seinen Aufhängelementen (L) aufgehängt werden kann,
die Handhabungsvorrichtung (1) enthält:
eine Trägereinheit (100, 1100), die Tragmittel (114, 1112) für das Tragen einer stangenförmigen Lagereinheit (R) und zumindest ein Aufnahmemittel (120, 1120) beinhaltet, das in eine Aufnahmerichtung (E) ausgerichtet und ausgelegt ist, um ein Aufhängelement (L) des zumindest einen wurstförmigen Produktes (S), welches an dieser stangenförmigen Lagereinheit (R) aufgehängt ist, aufzunehmen,
eine Verhinderungseinheit (200, 1200), die in einer zumindest annähernd vertikalen Richtung unterhalb der Trägereinheit (100, 1100) angeordnet ist und die zumindest ein Verhinderungsmittel (220, 1220) beinhaltet, das dafür ausgelegt ist, mit dem zumindest einem Aufnahmemittel (120, 1120) der Trägereinheit (100, 1100) zusammenzuwirken, um das Aufhängelement (L) des zumindest einen wurstförmigen Produktes (S), welches in dem zumindest einem Aufnahmemittel (120, 1120) der Trägereinheit (100, 1100) aufgenommen ist, zu sichern, und
Antriebsmittel (M), um zwischen einer Aufnahmeposition und einer Sicherungsposition eine Relativbewegung zwischen der Trägereinheit (100, 1100) und der Verhinderungseinheit (200, 1200) auf umkehrbare Weise zu ermöglichen.

2. Handhabungsvorrichtung nach Anspruch 1,
wobei das zumindest eine Aufnahmemittel (120, 1120) durch eine Aussparung der Öffnung, die in Aufnahmerichtung (E) ausgerichtet ist, ausgebildet ist.

3. Handhabungsvorrichtung nach Anspruch 1 oder 2,
wobei das zumindest eine Verhinderungsmittel (220, 1220) durch wenigstens einen Vorsprung, vorzugsweise zwei Vorsprünge, die in Aufnahmerichtung (E) ausgerichtet sind, ausgebildet ist.

4. Handhabungsvorrichtung nach einem der Ansprüche 1 bis 3,
wobei die Trägereinheit (100, 1100) und die Verhinderungseinheit (200, 1200) eine Vielzahl von Aufnahmemitteln (120, 1120) und Verhinderungsmitteln (220, 1220) umfassen.

5. Handhabungsvorrichtung nach Anspruch 4,
wobei die Aufnahmemittel (120, 1120) der Trägereinheit (100, 1100) und die Verhinderungsmittel (220, 1220) der Verhinderungseinheit (200, 1200) eine zumindest annähernd identische Gestaltung aufweisen.

6. Handhabungsvorrichtung nach Anspruch 4 oder 5,
wobei die Aufnahmemittel (120, 1120) der Trägereinheit (100, 1100) und die Verhinderungsmittel (220, 1220) der Verhinderungseinheit (200, 1200) so ausgelegt sind, dass sie in der Aufnahmeposition derart ausgerichtet sind, dass sich die Aufnahmemittel (120, 1120) und die Verhinderungsmittel (220, 1220) zumindest annähernd zueinander ausrichten, und so ausgelegt sind, dass sie in der Sicherungsposition derart ausgerichtet sind, dass die Aufnahmemittel (120, 1120) und die Verhinderungsmittel (220, 1220) zumindest teilweise zueinander versetzt sind.

7. Handhabungsvorrichtung nach einem der Ansprüche 1 bis 6,
wobei Verbindungsmittel (300, 1300) für eine bewegliche Verbindung der Trägereinheit (100, 1100) mit der Verhinderungseinheit (200, 1200) vorgesehen sind.

8. Handhabungsvorrichtung nach Anspruch 7,
wobei die Verbindungsmittel (300) zumindest einen Schwenkhebel (310) mit einem ersten Ende (312) und einem zweiten Ende (314) aufweisen, wobei das erste Ende (312) schwenkbar mit der Trägereinheit (100) und das zweite Ende (314) schwenkbar mit der Verhinderungseinheit (200) verbunden ist.

9. Handhabungsvorrichtung nach Anspruch 7,
wobei die Verbindungsmittel (300, 1300) Führungselemente aufweisen, die in gleitendem Eingriff miteinander stehen, wobei ein erstes Führungselement mit der Trägereinheit (100, 1100) verbunden ist und ein zweites Führungselement mit einer Verhinderungseinheit (200, 1200) verbunden ist.

10. Handhabungsvorrichtung nach einem der Ansprüche 1 bis 9,
wobei die Trägereinheit (100, 1100) und/oder die Verhinderungseinheit (200, 1200) für die umkehrbare Relativbewegung zwischen der Aufnahmeposition und der Sicherungsposition in eine Richtung bewegt werden, die zumindest annähernd horizontal und senkrecht zu der Aufnahmerichtung (E) ist.

11. Handhabungsvorrichtung nach einem der Ansprüche 1 bis 10,
wobei Kupplungsmittel (400, 1400) vorzugsweise an der Trägereinheit (100, 1100) vorgesehen sind, welche zumindest annähernd einer Richtung zugewandt sind, die der Aufnahmerichtung (E) entgegengesetzt ist, um die Handhabungsvorrichtung (1, 1001) an das Manipulationssystem zu koppeln.

12. Handhabungsvorrichtung nach einem der Ansprüche 1 bis 11,
wobei die Antriebsmittel (M) zum Ausführen der umkehrbaren Relativbewegung zwischen der Trägereinheit (100, 1100) und der Verhinderungseinheit (200, 1200) zwischen der Aufnahmeposition und der Sicherungsposition die Trägereinheit (100, 1100) und/oder die Verhinderungseinheit (200, 1200) antreiben.

13. Handhabungsvorrichtung nach einem der Ansprüche 1 bis 11,
wobei die Trägereinheit (100) und/oder die Verhinderungseinheit (200) Befestigungsmittel enthalten, die mit einem externen Antriebsmittel verbunden werden können, um die umkehrbare Relativbewegung zwischen der Trägereinheit (100) und der Verhinderungseinheit (200) zwischen der Aufnahmeposition und der Sicherungsposition auszuführen.

14. Verfahren zur Handhabung von stangenförmigen Lagereinheiten (R), wie Räucherstangen, die ausgelegt sind, um mit zumindest einem wurstförmigen Produkt (S), wie einer Wurst, das einen wurstförmigen Körper (B) und ein Aufhängelement (L), wie eine Aufhängschlaufe, hat, beladen zu werden, wobei das zumindest eine wurstförmige Produkt (S) an einer stangenförmigen Lagereinheit (R) an seinen Aufhängelementen (L) aufgehängt werden kann, wobei die Handhabung der stangenförmigen Lagereinheiten (R) von einer Handhabungsvorrichtung (1, 1001) ausgeführt wird, welche eine Trägereinheit (100, 1100), die zumindest ein Aufnahmemittel (120, 1120) hat, und ein Verhinderungseinheit (200, 1200), die zumindest ein Verhinderungsmittel (220, 1220) hat, enthält,
das Verfahren enthält die Schritte:
- Bewegen der Handhabungsvorrichtung (1, 1001) in eine Aufnahmerichtung (E), um eine stangenförmige Lagereinheit (R) durch eine Trägereinheit (100, 1100) aufzunehmen und zu tragen;
- Aufnehmen des Aufhängelements (L) des zumindest einen wurstförmigen Produktes (S) durch das Aufnahmemittel (120, 1120); und
- Sichern des Aufhängelements (L) des zumindest einen wurstförmigen Produktes (S) durch das Ausführen einer Relativbewegung zwischen der Trägereinheit (100, 1100) und der Verhinderungseinheit (200, 1200).

15. Verfahren nach Anspruch 14,
wobei der Schritt des Sicherns der stangenförmigen Lagereinheit (R) durch eine Bewegung der Trägereinheit (100, 1100) und/oder der Verhinderungseinheit (200, 1200) in eine Richtung (D) zumindest annähernd horizontal und senkrecht zur Aufnahmerichtung (E) ausgeführt wird.

## Revendications

1. Appareil de manipulation pour manipuler des dispositifs de stockage en forme de tige (R), comme des tiges à fumer, configurés pour être chargés avec au moins un produit en forme de saucisse (S), comme une saucisse, ayant un corps en forme de saucisse (B) et un élément de suspension (L), comme une boucle de suspension, le ou les produits en forme de saucisse (S) pouvant être suspendus sur un dispositif de stockage en forme de tige (R) par leurs éléments de suspension (L),
l'appareil de manipulation (1) comprend :
un dispositif de support (100, 1100) comprenant des moyens de support (114, 1112) pour supporter un dispositif de stockage en forme de tige (R) et au moins un moyen de réception (120, 1120) orienté dans une direction de réception (E) et configuré pour recevoir un élément de suspension (L) du ou des produits en forme de saucisse (S) suspendus sur ledit dispositif de stockage en forme de tige (R),
un dispositif de prévention (200, 1200) qui est disposé dans une direction au moins approximativement verticale au-dessous du dispositif de support (100, 1100) et comprenant au moins un moyen de prévention (220, 1220) configuré pour coopérer avec le ou les moyens de réception (120, 1120) du dispositif de support (100, 1100) pour fixer l'élément de suspension (L) du ou des produits en forme de saucisse (S) qui sont reçus dans le ou les moyens de réception (120, 1120) du dispositif de support (100, 1100), et
des moyens d'entraînement (M) pour permettre de façon réversible un mouvement relatif entre le dispositif de support (100, 1100) et le dispositif de prévention (200, 1200) entre une position de réception et une position de fixation.

2. Appareil de manipulation selon la revendication 1,
dans lequel le ou les moyens de réception (120, 1120) sont formés par un évidement de l'ouverture qui est dirigé dans la direction de réception (E).

3. Appareil de manipulation selon la revendication 1 ou 2,
dans lequel le ou les moyens de prévention (220, 1220) sont formés par au moins une, de préférence deux saillies dirigées dans la direction de réception (E).

4. Appareil de manipulation selon l'une quelconque des revendications 1 à 3,
dans lequel le dispositif de support (100, 1100) et le dispositif de prévention (200, 1200) comprennent une pluralité de moyens de réception (120, 1120) et des moyens de prévention (220, 1220).

5. Appareil de manipulation selon la revendication 4,
dans lequel le moyen de réception (120, 1120) du dispositif de support (100, 1100) et les moyens de prévention (220, 1220) du dispositif de prévention (200, 1200) sont de conception au moins approximativement identique.

6. Appareil de manipulation selon la revendication 4 ou 5,
dans lequel les moyens de réception (120, 1120) du dispositif de support (100, 1100) et les moyens de prévention (220, 1220) du dispositif de prévention (200, 1200) sont configurés pour être agencés dans la position de réception de telle sorte que les moyens de réception (120, 1120) et les moyens de prévention (220, 1220) s'alignent au moins approximativement les uns avec les autres, et sont configurés pour être agencés dans la position de fixation de telle sorte que les moyens de réception (120, 1120) et les moyens de prévention (220, 1220) sont au moins partiellement décalés les uns par rapport aux autres.

7. Appareil de manipulation selon l'une quelconque des revendications 1 à 6,
dans lequel des moyens de liaison (300, 1300) pour une liaison mobile du dispositif de support (100, 1100) et du dispositif de prévention (200, 1200) sont prévus.

8. Appareil de manipulation selon la revendication 7,
dans lequel les moyens de liaison (300) comprennent au moins un levier de pivotement (310) ayant une première extrémité (312) et une seconde extrémité (314), la première extrémité (312) étant reliée de manière pivotante au dispositif de support (100) et la seconde extrémité (314) étant reliée de manière pivotante au dispositif de prévention (200).

9. Appareil de manipulation selon la revendication 7,
dans lequel les moyens de liaison (300, 1300) comprennent des éléments de guidage en prise coulissante les uns avec les autres, un premier élément de guidage étant relié au dispositif de support (100, 1100) et un second élément de guidage étant relié au dispositif de prévention (200, 1200).

10. Appareil de manipulation selon l'une quelconque des revendications 1 à 9,
dans lequel le dispositif de support (100, 1100) et/ou le dispositif de prévention (200, 1200) pour le mouvement relatif réversible entre la position de réception et la position de fixation sont déplacés dans une direction au moins approximativement horizontale et perpendiculaire à la direction de réception (E).

11. Appareil de manipulation selon l'une quelconque des revendications 1 à 10,
dans lequel des moyens de couplage (400, 1400) sont disposés de préférence au niveau du dispositif de support (100, 1100) faisant face au moins approximativement dans une direction opposée à la direction de réception (E), pour coupler l'appareil de manipulation (1, 1001) à un système de manipulation.

12. Appareil de manipulation selon l'une quelconque des revendications 1 à 11,
dans lequel les moyens d'entraînement (M) pour exécuter le mouvement relatif réversible entre le dispositif de support (100, 1100) et le dispositif de prévention (200, 1200) entre la position de réception et la position de fixation entraînent le dispositif de support (100, 1100) et/ou le dispositif de prévention (200, 1200).

13. Appareil de manipulation selon l'une quelconque des revendications 1 à 11,
dans lequel le dispositif de support (100) et/ou le dispositif de prévention (200) comprend des moyens de fixation pouvant être reliés à un moyen d'entraînement externe pour exécuter le mouvement relatif réversible entre le dispositif de support (100) et le dispositif de prévention (200) entre la position de réception et la position de fixation.

14. Procédé de manipulation de dispositifs de stockage en forme de tige (R), comme des tiges à fumer, configurés pour être chargés avec au moins un produit en forme de saucisse (S), comme une saucisse, ayant un corps en forme de saucisse (B) et un élément de suspension (L), comme une boucle de suspension, le ou les produits en forme de saucisse (S) pouvant être suspendus à un dispositif de stockage en forme de tige (R) par ses éléments de suspension (L), la manipulation des dispositifs de stockage en forme de tige (R) étant effectuée par un appareil de manipulation (1, 1001) qui comprend un dispositif de support (100, 1100) ayant au moins un moyen de réception (120, 1120), et un dispositif de prévention (200, 1200) comprenant au moins un moyen de prévention (220, 1220),
le procédé comprend les étapes consistant à :
- déplacer l'appareil de manipulation (1, 1001) dans une direction de réception (E) pour recevoir et supporter un dispositif de stockage en forme de tige (R) par le dispositif de support (100, 1100) ;
- recevoir l'élément de suspension (L) du ou des produits en forme de saucisse (S) par les moyens de réception (120, 1120) ; et
- fixer l'élément de suspension (L) du ou des produits en forme de saucisse (S) par l'exécution d'un mouvement relatif entre le dispositif de support (100, 1100) et le dispositif de prévention (200, 1200).

15. Procédé selon la revendication 14,
dans lequel l'étape de fixation du dispositif de stockage en forme de tige (R) est exécutée par un mouvement du dispositif de support (100, 1100) et/ou du dispositif de prévention (200, 1200) dans une direction (D) au moins approximativement horizontale et perpendiculaire à la direction de réception (E).
